(19) Europäisches Patentamt
European Patent Office
Office européen des brevets

(11) Numéro de publication: **0 145 518**
**A1**

(12) # DEMANDE DE BREVET EUROPEEN

(21) Numéro de dépôt: **84401868.9**

(51) Int. Cl.⁴: **C 08 F 8/00**

(22) Date de dépôt: **20.09.84**

(30) Priorité: **20.09.83 FR 8314939**

(43) Date de publication de la demande: **19.06.85 Bulletin 85/25**

(84) Etats contractants désignés: **AT BE CH DE GB IT LI LU NL SE**

(71) Demandeur: **CENTRE NATIONAL DE LA RECHERCHE SCIENTIFIQUE (C.N.R.S.), 15, Quai Anatole France, F-75007 Paris (FR)**

(72) Inventeur: **Fouletier, Mireille, 2, rue Auguste Ravier, F-38100 Grenoble (FR)**
Inventeur: **Armand, Michel, 10, rue Gabriel Fauré, F-74000 Annecy (FR)**

(74) Mandataire: **Peaucelle, Chantal et al, Cabinet Plasseraud 84, rue d'Amsterdam, F-75009 Paris (FR)**

(54) **Dérivés de carbones polymères, leur préparation et leurs applications notamment chimiques et électrochimiques.**

(57) Les carbones polymères sont formés de chaînes de carbone linéaire dupliquées dans lesquelles les atomes de carbone sont organisés en cycles aromatiques et comprennent des motifs de structure $-CR_xH_y-$ où R représente un alcoxy, –OH, un hydrocarbure aliphatique, une amine, un amide, un groupe cyano ou un radical cyclique aromatique ou hétérocyclique et x + y est inférieur à 0,5, y pouvant être nul.

EP 0 145 518 A1

Dérivés de carbones polymères, leur préparation et leurs applications notamment chimiques et électrochimiques.

L'invention est relative à des dérivés de carbones polymères, à leur préparation et à leurs applications notamment chimiques et électrochimiques.

Les carbones polymères sont largement utilisés dans l'industrie en raison de leurs remarquables propriétés physiques et chimiques.

On conçoit aisément l'intérêt de l'introduction de groupements fonctionnels sur les chaînes de ces matériaux en vue d'élargir leur champ d'application et de mieux satisfaire aux exigences de la technique.

La plupart des méthodes proposées à cet effet sont basées sur la transformation de groupements superficiels contenant de l'oxygène, tels qu'oxydes, hydroxydes, quinones, acides et autres groupes oxygénés, ces groupements étant présents lorsque le carbone a été exposé à l'air et à l'humidité.

Ces fonctions sont ensuite utilisées comme éléments de liaison avec les groupements fonctionnels recherchés.

D'autres auteurs ont fait réagir, à température ambiante, des fibres de carbone, désoxygénées à haute température, avec des oléfines et ont obtenu ainsi des produits de cycloaddition.

L'introduction de groupements fonctionnels sur des chaînes carbonées a été également réalisée par activation de carbone par abrasion sous atmosphère inerte ou par traitement sous plasma d'argon.

Dans tous les cas, les concentrations des groupements introduits sont toujours très faibles, au maximum de quelques %.

Dans le cadre de travaux relatifs à la préparation de formes métastables de carbone, plus spécialement de carbone linéaire, les inventeurs ont étudié la réduction de carbones polymères halogénés tels que le polytétrafluoroéthylène ou PTFE sous l'action de métaux alcalins.

On sait que cette réaction conduit à un mélange solide de carbone polymère réduit et d'halogénure alcalin. Ces halogénures alcalins sont difficilement séparables sans altération de la structure physique et chimique du polymère.

En mettant au point des conditions permettant d'effectuer cette séparation dans des conditions satisfaisantes, les inventeurs ont constaté qu'il était possible d'obtenir une nouvelle structure de chaînes de carbone et de mettre à profit l'activité du polymère réduit pour introduire sur les chaînes des groupements fonctionnels.

L'invention a donc pour but de fournir de nouveaux carbones polymères substitués par une large gamme de groupements fonctionnels, utilisables dans de nombreux secteurs techniques.

Elle vise également à fournir un procédé de préparation de ces dérivés de mise en oeuvre aisée grâce auquel des carbones polymères halogénés, après réduction, peuvent être utilisés comme agents de synthèse. Elle a également pour but l'utilisation de ces dérivés dans des réactions chimiques ou électrochimiques mises en jeu dans divers secteurs de l'industrie.

Les carbones polymères de l'invention sont caractérisés en ce qu'ils sont essentiellement formés de chaînes de carbone linéaire dupliquées (c'est-à-dire ayant subi une duplication) dans lesquelles les atomes de carbone sont organisés en cycles aromatiques, ces chaînes comprenant des motifs de structure

$$- C R_x H_y -$$

dans laquelle

- R représente un radical alcoxy de 1 à 30 atomes de carbone, éventuellement substitué, un groupe hydroxyle, un hydrocarbure aliphatique saturé ou insaturé, à chaîne droite ou ramifiée, renfermant de 1 à 30 atomes de carbone, un radical amine primaire ou secondaire, amide, un groupe cyano, un radical cyclique aromatique ou hétérocyclique, substitué ou non substitué ;
- la somme des indices x + y est inférieure à 0,5, y pouvant être nul.

Une famille préférée de polymères de l'invention comprend des motifs $-C(R)_x-$ dans lesquels R représente un radical aliphatique, plus spécialement un radical alcoyle de 1 à 30 atomes de carbone, notamment un radical méthyle, éthyle, propyle ou butyle, ces radicaux étant éventuellement substitués, notamment par du fluor.

D'une manière générale, les radicaux aliphatiques confèrent un caractère hydrophobe au polymère carboné. Ce caractère est accentué en utilisant un radical à longue chaîne ou fluoré.

Dans une autre famille préférée, R représente un groupe alcoxy, éventuellement substitué, comprenant de 1 à 30 atomes de carbone. Des groupes préférés comprennent les radicaux méthoxy, éthoxy, propoxy, butoxy, aminoéthoxy ou halogénoéthoxy. Le substituant R dans une autre famille de polymères de l'invention représente de manière avantageuse un groupe $-NH_2$ ou encore $-NHR_1$ ou $-N\langle{}^{R_2}_{R_3}$ dans lesquels $R_1$, $R_2$ et $R_3$ représentent des radicaux alcoyle de 1 à 30 atomes de carbone.

Le greffage de ce type de groupements par l'intermédiaire de l'alcool correspondant est particulièrement aisé. Ces groupements constituent notamment des ponts

d'attache de nombreuses fonctions et permettent par exemple des fixations d'enzymes.

Dans d'autres polymères préférés, R représente un groupe cyano.

D'autres polymères encore comprennent des motifs $-C(R)_x-$ dans lesquels R représente un cycle aromatique en particulier un cycle benzénique ou encore un hétérocycle. De tels produits se prêtent notamment à des réactions de sulfonation ou de greffage de type Friedel-Crafts.

Les carbones polymères de l'invention comportant les motifs $-C(R)_x-$ définis ci-dessus présentent une structure dérivée de celle des chaînes élaborées par réaction d'un précurseur du radical R défini ci-dessus sur un carbone polymère réduit.

L'invention vise également un procédé de préparation des dérivés définis ci-dessus.

Selon ce procédé, on fait réagir un polymère organique macromoléculaire réduit formé de chaînes de carbone linéaire, ce polymère comprenant des motifs carbonés de structure

$$-(CM_z)-$$

dans laquelle

- M représente un métal alcalin ;
- z le taux d'insertion du métal alcalin sur la chaîne carbonée,

avec un dérivé comprenant un radical X capable de réagir avec le métal M pour former un sous-produit MX facilement soluble, sans fixation de X sur les chaînes carbonées et/ou un précurseur des radicaux R définis ci-dessus, suffisamment réactif pour former lui aussi un dérivé avec M.

On sépare les sous-produits de la réaction et on récupère le polymère substitué par R.

Le polymère réduit utilisé selon l'invention comme agent de synthèse est avantageusement obtenu par

réaction d'un agent réducteur, plus spécialement d'un métal alcalin M ou d'un dérivé capable de libérer M dans les conditions mises en oeuvre, sur un polymère halogéné, c'est-à-dire formé de chaînes de carbone substituées par des halogènes.

Ces halogènes sont choisis de préférence parmi le chlore et le fluor.

Des polymères préférés comprennent le polychlorotrifluoroéthylène et plus spécialement le PTFE.

Le métal alcalin est constitué de préférence par du lithium, du potassium ou du sodium.

La réaction de réduction est réalisée de préférence en milieu organique.

Des solvants appropriés correspondent à des milieux fortement donneurs et comprennent le tétrahydrofuranne (THF), le diméthylformamide (DMF), la tétraméthyléthylènediamine (TMDA), ses homologues et/ou les mélanges de TMDA et de ses homologues avec des solvants de type aromatique tel quc le benzène ou le toluène.

Selon une disposition avantageuse de l'invention, le milieu réactionnel renferme une quantité catalytique de composé polyaromatique.

De nombreux composés polyaromatiques peuvent être réduits réversiblement par les métaux alcalins en milieu fortement donneur.

A titre d'exemples, on citera : le naphtalène, le triphénylène, le phénanthrène, le benz(a)pyrène, le pyrène, le benz(a)anthracène, le 9,10-diméthylanthracène, l'anthracène, le benz(e)pyrène, l'acenaphtylène, le fluoranthène, le pérylène.

L'utilisation d'un composé polyaromatique comme intermédiaire de réaction permet notamment d'effectuer la réaction de réduction à potentiel constant et d'en contrôler l'achèvement, la solution réactionnelle renfermant ce composé se décolorant après consommation du métal

alcalin.

Ainsi, la réduction par exemple du naphtalène en solution dans le THF par le lithium donne naissance à un radical anion de couleur verte ; celle de la benzophénone par des quantités croissantes de lithium conduit successivement au radical anion (bleu) puis au di-anion (rouge).

Le taux d'insertion y, dans les motifs de structure - $(CM_y)$ - est fonction de la quantité de métal alcalin introduite et du couple rédox utilisé.

La quantité de métal alcalin doit permettre au moins d'atteindre la stoechiométrie désirée.

On utilise généralement un excès pour atteindre la stoechiométrie limite.

Le composé polyaromatique est avantageusement mis en oeuvre à raison de 0,1 % à 50 % molaire de préférence de l'ordre de 1 à 10 % molaire par motif polymère.

Par exemple, la réduction de PTFE par le naphtalène-lithium en excès conduit à un taux d'insertion limite de l'ordre de 25 %.

On considère que le métal M inséré est fortement solvaté par le solvant du milieu réactionnel.

Cette co-insertion est un phénomène connu, observé notamment dans le cas de la réduction chimique du polyacétylène.

Une solvatation de l'ordre de 0,5 mole de solvant par mole de métal inséré, dans le cas du lithium, a été évaluée sur des produits de l'invention en mesurant la variation de poids des produits solides.

D'une manière générale, le solvant co-inséré n'est pas gênant pour les réactions ultérieures.

Ce solvant peut de toute façon être éliminé si on le souhaite et, par exemple, dans le cas où M représente K ou Na, en opérant sous vide à une température de l'ordre de 50°C.

Conformément à l'invention, le polymère réduit est soumis soit à l'action successive d'un dérivé comportant un radical X capable de réagir avec le métal alcalin M puis d'un précurseur du radical R capable de se substituer au métal M, soit directement à l'action du précurseur R.

Le radical X représente avantageusement un atome d'halogène tel que Br ou I.

Pour l'introduction d'un radical aliphatique ou aromatique sur le carbone polymère, on utilise avantageusement, comme dérivé réactif soit un dérivé organométallique associé au radical correspondant.

L'introduction de groupes aminés est réalisée de préférence à l'aide de dérivés métalliques de l'amine, par exemple de type $R_1$ NH Li ou $R_1R_2$ N Li, $R_1$ et $R_2$ représentant des groupes alcoyle.

Les groupes cyano sont avantageusement introduits en mettant en oeuvre des halogénures de nitrile, notamment ICN.

Pour l'introduction de groupements alcoxy, on met en oeuvre avec avantage l'alcool correspondant ou son dérivé métallique, étant entendu que cet alcool peut contenir des groupements intéressants pour les applications de ces produits. Ces groupements peuvent être présents sur l'alcool ou obtenus après traitement selon des méthodes appropriées, connues en chimie organique.

L'élimination des halogénures alcalins formés comme sous-produits de la réaction de réduction est avantageusement réalisée par dissolution de ces sels, soit en milieu acide, soit en milieu basique.

Pour la dissolution en milieu acide des fluorures, qui consituent des bases fortes, on utilise des solvants de caractère accepteur marqué tels que l'eau, le méthanol ou le formamide.

On note une diminution de solubilité dans l'eau en passant du sel de potassium au sel de lithium, le sel de potassium étant seul soluble dans les autres solvants.

En milieu aprotique, pour complexer l'anion fluorure, on utilise un acide fort tel que $BF_3$, $BA_3$, A représentant un alcoyle , ou $SO_3$ qui forment avec les bases des complexes plus aisément manipulables.

Pour la dissolution en milieu basique aprotique, on a avantageusement recours à des complexants sélectifs des cations alcalins, tels que les éthers couronne ou les kryptates.

L'utilisation de ces complexants en quantité stoechiomètriqueconduit à la dissolution pratiquement totale des fluorures dans l'acétonitrile.

Les produits solides sontisolés; du milieu réactionnel par exemple par filtration.

Ces produits sont séchés sous vide à des températures de l'ordre de 150-200°C.

Avant cette opération de séchage, on les soumet avantageusement à un ou plusieurs lavages à l'aide de solvants , avantageusement du solvant utilisé comme milieu réactionnel pour l'étape de réduction.

Selon une variante de l'invention, on sépare le métal M inséré dans le polymère réduit avant d'éliminer les halogénures alcalins formés sous-produits de la réaction de réduction et d'effectuer la réaction avec le dérivé permettant d'introduire les groupes fonctionnels désirés.

Pour cette séparation, ou "désinsertion", on utilise un agent oxydant inerte vis-à-vis des chaînes carbonées réduites, ne conduisant pas à la formation de produits insolubles dans le milieu réactionnel, difficilement éliminables.

Des agents convenant à cet effet comprennent, le brome, l'iode, ou des dérivés de ces derniers qui conduisent à des produits de réduction très solubles dans des solvants comme le THF.

Dans les conditions de mise en oeuvre, l'iode ne s'additionne pas au carbone et la réduction conduit aux carbones désirés.

En raison de commodités de manipulation, il apparaît avantageux d'utiliser à la place du brome un complexe le libérant, par exemple, le complexe solide brome-bromure de phényldiméthylammonium.

En opérant selon une autre variante, il est alors possible d'utiliser, comme dérivé dans la réaction avec le polycarbanion un précurseur du groupe fonctionnel R que l'on souhaite introduire.

Par exemple, par mise en contact du polycarbanion avec de l'eau ou un alcool, il est possible de fixer ces derniers sur les chaînes de polymère.

D'une manière avantageuse, les polymères de l'invention présentent, grâce à leur squelette carboné, une conductivité électrique élevée et une grande inertie chimique.

L'intérêt des groupements greffés ou des électrodes de carbone a été largement démontré dans le domaine des capteurs électrochimiques pour des réactions électrochimiques sélectives.

L'avantage des matériaux de l'invention est de permettre un greffage à très haute densité de fonctions.

La variété de groupes fonctionnels pouvant être

greffés sur ces chaînes polymères permet de les utiliser dans de nombreux secteurs de l'industrie pour la fixation de groupements enzymatiques en biologie, de molécules sélectives de reconnaissance des ions, de catalyseurs de réduction de gaz tels que $O_2$.

L'intérêt de ces produits est particulièrement important dans des réactions chimiques et/ou dans des réactions électrochimiques dans la mesure où les propriétés sélectives ou catalytiques des matériaux greffés permettent une utilisation à basse température.

Le caractère pulvérulent des matériaux obtenus permet leur mise en oeuvre dans des électrodes composites obtenues à l'aide d'un matériau liant de type macromoléculaire. Ce genre de technologie est bien connu pour la mise en oeuvre des électrodes de carbone.

Afin d'illustrer l'invention, on rapporte, ci-après, des exemples de préparation de divers types de polymères.

Les exemples 1 à 3 se rapportent à la préparation de carbones polymères comportant des motifs $-C(H_2O)_{\bar{x}}$.

EXEMPLE 1 - Préparation de carbones polymères comportant des motifs de formule $-(C\text{-}OH_x\ H_y)$ avec x = y = 0,1.

Une suspension de 1,525 g de PTFE (15,25mM) dans THF est réduite par 3,062 g (78,5mM) de potassium en présence de 514 mg (4mM) de naphtalène.

L'excès de potassium est ensuite oxydé par 2,260 g (18mM) d'iode. Les produits solides ainsi obtenus sont filtrés, lavés au THF, puis à l'acétonitrile etséchés. Ils sont alors lavés à l'eau distillée à l'air libre, puis lavés à l'éther et séchés sous vide à 170°C.

Composition : C:76,28% ; H : 2,53% ; F : 1,07% ; K :1,14% ; (total : 81,02) soit une composition approximative de :

$$C\ (H_2O)_{0,20}, \varepsilon\ KF,\ \varepsilon'(C_2F_4)\ ;\ \varepsilon = 5\ 10^{-3},\ \varepsilon' = 10^{-3}$$

Spectre IR : 3400 - 2320 (?) - 1620 $cm^{-1}$

EXEMPLE 2 :

2,026 g (20,26 mM) de PTFE sont mis en suspension dans le THF et réduits par 2,082 g (90,52 mM) de sodium en présence de 182 mg (1,4mM) de naphtalène. L'excès de sodium inséré est neutralisé par 1,260 g (9,9 mM) d'iode. Les produits solides sont alors lavés au THF, puis à l'eau distillée sous atmosphère inerte d'argon, puis filtrés et séchés sous vide à 150°C.

Composition : C : 73,35% ; H : 2,65% ; F : 5,64% ; Na 2,14% (total : 83,78) soit une composition approximative de :

$$C(H_2O)_{0,22}, \varepsilon\ NaF,\ \varepsilon'(C_2F_4)\ ;\ \varepsilon = 0,015,\ \varepsilon' = 9,10^{-3}$$

Spectre IR : 3450 -2920 - 2850- 2360(?) - 2300 - 1630 - 1380 (?) $cm^{-1}$

Exemple 3 :

2,330 g (10mM) de poly chlorotrifluoroéthylène en suspension dans le THF sont réduits par 3, 262 g (84 mM) de potassium

en présence de 200 mg (1,1mM) de benzophénone. Après réaction, l'excès de potassium est oxydé par 510 mg (4mM) d'iode. Les produits solides sont séparés du milieu réactionnel par filtration, lavés avec THF puis ACN et enfin, à l'air libre, lavés à l'eau. Après lavage à l'éther, ces produits sont séchés sous vide à 100°C.

Composition : C : 67,86% ; H : 2,26% ; Cl : 4,70% ; I : 0,49% ; F : 7,83% ; K : 2,94% ; (total : 86,08%) soit une composition approximative.

$C(H_2O)_{0,21}$, $\varepsilon$ KX, $\varepsilon'(C_2X_4)$ ; $\varepsilon = 0,014$, $\varepsilon' = 0,044$ (avec X = Cl ou F ou I)

Exemple 4 : Préparation de carbones polymères comportant des motifs $-C(CH_3O)_x H_y$ avec x = y = 0,21

2,000 g (20 mM) PTFE en suspension dans le THF sont réduits par 3, 463g (88,8 mM) de potassium en présence de 522 mg (4mM) de napthalène et d'un éther couronne, complexant sélectif du potassium, 18- couronne - 6 (1,269 g soit 4,8 mM).

Après réduction, l'excès de potassium inséré est oxydé par l'iode (1,147 mg, soit 9 mM), les produits solides sont séparés du milieu réactionnel, rincés au THF, puis à l'ACN.

Le méthanol destiné à dissoudre le fluorure de potassium est ajouté progressivement à la solution d'acétonitrile contenant les produits en suspension. Après un lavage final dans le méthanol effectué sous ultra-sons, les produits sont séchés sous vide à 200°C.

Composition : C : 68,85% ; 43,92% ; F : 4,14% ; K : 2,84% (total : 79,75%) soit approximativement :

$C(CH_3OH)_{0,21}$, $\varepsilon$ KF, $\varepsilon' C_2F_4$ avec $\varepsilon = 0,016$ et $\varepsilon'$ : 8 $10^{-3}$

Spectre IR : 3450 - 2900 - 2850 - 2320 - 1620 - 1450
1340 - 1250 - 1100 $cm^{-1}$

Exemple 5 : Préparation de carbones polymères comportant des motifs $-C(OC_2H_5)_x H_y$

2,326 g (20 mM) de poly chlorotrifluoroéthylène en suspension dans le THF sont réduits par 615 mg (88mM) de lithium en présence de 222 mg (1,2 mM) de benzophénone. Après réaction, l'excès de lithium est désinséré par l'iode (1,033 g soit 8,1 mM). Les produits solides ainsi obtenus sont lavés dans le THF pur, puis dans un mélange THF-ACN (80/20) et enfin mis en suspension dans l'acétonitrile.

Le trifluorure de bore destiné à complexer le fluorure de lithium est introduit sous la forme du complexe $(BF_3(OC_2H_5)_2)$ et ajouté par petites quantités à la solution.

Après lavage à l'acétonitrile et filtration, le produit est séché sous vide à 200°C. Au cours de cette opération, on observe la distillation du complexe $(BF_3,ACN)$.

Composition : C : 81,88% ; H : 3,69% ; Cl : 2,34% ;
I : 3,12% ; B : 0,84%.

Spectre IR : 3450 - 2920 - 2850 - 1700 (?) - 1620 $cm^{-1}$.

Exemple 6 : Préparation de carbones polymères comportant des motifs $-C(C_2H_5OCH_3)_x H_y$

2,000 g (20 mM) de polytétrafluoroéthylène en suspension dans THF sont réduits par 3,365 g (86 mM) de potassium, en présence de 209 mg (1,6mM) de naphtalène).

Après réaction, l'excès de potassium inséré est oxydé par 841 mg (6,6mM) d'iode. Le produit obtenu

est lavé au THF puis à l'acétonitrile et traité par une solution de (tris(2-méthoxyéthyl)) borate dans l'acétonitrile (mélange 30 - 70% en volume).

Les produits solides sont alors lavés à l'acétonitrile et desséchés sous vide à 150°C.

Composition : C : 48,35% ; H : 4,09% ; F : 6,93% ; I : 0,61% ; K : 6,52% ; B : 1,61% (total : 68,10%).

Spectre IR : 3420 - 2950 - 2910 - 2850 - 2300 - 1620 - 1430 (?) $cm^{-1}$

Exemple 7 : Préparation de carbones polymères comportant des motifs $-C(C_4H_{10})_x H_y$

2,000 g (20mM) de polytétrafluoroéthylène en suspension dans le THF sont réduits par 3,522 g (90 mM) de potassium en présence de 210 mg (1,2 mM) de naphtalène.

L'excès de potassium inséré est oxydé par l'iode (1,353 g soit 10,6mM).

Après lavage au THF, les produits sont mis en suspension dans l'acétonitrile et traités par 55 $cm^3$ d'une solution molaire de tributylborane dans le THF. Après lavage à l'acétonitrile, les produits sont séchés sous vide à 150°C.

Composition : C : 16,11% ; H : 1,03% ; K : 53,43% ; F : 23,66% ; I : 1,09% ; B : 0,29% (total : 95,61%).

Exemple 8 : Préparation de carbones polymères comportant des motifs $-C(CH_3)_x H_y$

1,000 g (10mM) de polytétrafluoroéthylène en suspension dans le THF sont réduits par 1,912 g (49mM) de potassium en présence de 418 mg (1,7mM) de triphényle borane : la réaction est extrêmement lente et le potassium n'est consommé qu'après plusieurs semaines L'excès de potassium

inséré est oxydé par 1,155 g (9,1mM) d'iode. Après lavage au THF, les produits solides sont filtrés et séchés sous vide à température ordinaire (masse obtenue : 3,142 g).

- Préparation 8-a -

Une aliquote (1,005 g) du produit précédent est mise en suspension dans une solution de (tris(2-méthoxyéthyl)) borate dans l'acétonitrile (30 - 70 % en volume). Les produits sont ensuite lavés à l'acétonitrile et séchés sous vide à 200°C.

Exemple 9 - Préparation de carbones polymères comportant des motifs $-C(CH_3)_x H_y$

1,516 g (30,3mM) PTFE sont réduits par 2,642 g (67,74mM) de potassium en présence de 207 mg d naphtalène.

Après consommation du métal alcalin et renouvellement du solvant, 1?8 g (12mM) de fluoroborate de triméthyloxonium sont ajoutés.

Les produits solides sont alors lavés avec THF et séchés sous vide à 100°C.

Composition : ~~C : 11~~,93% ; H : 0,69% ; K : 46,06% ; B : 4,31%

Une aliquote (2,02g) du produit précédent est lavée à l'eau puis séchée sous vide à 150°C.

Composition : C : 74,33% ; H : 4,24% ; F : 4,83% ; K : 2,76% (total : 86,16%).

Les exemples 10 et 11 se rapportent à la préparation de carbones polymères comportant des radicaux -CN-Exemple 10

1080 g (21,60mM) PTFE en suspension dans le THF sont réduits par 1,988 g (57mM) de potassium en présence de 73 mg de naphtalène.

Après réaction, 4,21 g (28mM) ICN sont progressivement ajoutés au mélange réactionnel.

Le fluorure de potassium est éliminé par dissolution dans le méthancl : on constate que le dégagement de chaleur accompagnant cette addition de méthanol porte le solvant à ébullition.

Composition : C : 48,09% ; H : 2,39% ; N : 7,54% ; K : 17,04% ; F : 12,40% (total 87,46%)

soit une composition approximative : $C(CN)_{0,19}(CH_3OH)_{0,22}$.

Spectre IR :

3400 - 2320 - 2180 - 2100 - 1830 - 1520 - 1260 - 1230 $cm^{-1}$.

Exemple 11 :

1,100 g (22mM) PTFE sont réduits par 326 mg (46,57 mM) de lithium en présence de 104 mg de naphtalène.

Après consommation du lithium et renouvellement du solvant (THF), 3,70 g (24mM) ICN sont ajoutés. Le fluorure de lithium est éliminé par complexation avec l'éthérate du trifluorure de bore.

Les produits solides sont lavés au THF puis séchés sous vide à 100°C.

Composition : C 60,32% ; N : 7,98% ; B : 1,96%.

Exemple 12 - Application de Co sur un matériau de l'invention

2 g de PTFE sont réduits par K selon l'exemple 7 et traités par 10 g (96 mM) d'hydroxyéthyléthylènediamine. Les produits sont lavés à l'aide de MeOH puis additionnés de 2 g (10 mM) de $Cl_2CO$, 4 $H_2O$ en solution dans 10 ml de MeOH. Ces produits sont rincés à l'eau et séchés à 50°C sous vide.

Exemple 13 - Application comme électrodes

0,1 g du matériau greffé obtenu à l'exemple 1 est mis en forme à l'aide de 0,1 ml d'une suspension de PTFE sous forme d'une pâte pressée sur une grille de Ni. L'électrode constituée est utilisée pour la construction d'un générateur miniature de type 20-R. La polarisation est inférieure à celle observée pour une électrode de carbone non greffé.

REVENDICATIONS

1. Nouveaux dérivés de carbones polymères formés de chaînes de carbone linéaire dupliquées dans lesquelles les atomes de carbone sont organisés en cycles aromatiques, ces chaînes comprenant des motifs de structure

$$- C\, R_x\, H_y -$$

dans laquelle

- R représente un radical alcoxy de 1 à 30 atomes de carbone éventuellement substitué, un groupe hydroxyle, un hydrocarbure aliphatique saturé ou insaturé, à chaîne droite ou ramifiée, renfermant de 1 à 30 atomes de carbone, un radical amine primaire ou secondaire, amide, un groupe cyano, un radical cyclique aromatique ou hétérocyclique, substitué ou non substitué ;
- la somme de x + y est inférieure à 0,5, y pouvant être nul.

2. Dérivés selon la revendication 1, caractérisés en ce qu'ils comprennent des motifs dans lesquels R représente un radical aliphatique; plus spécialement un radical alcoyle de 1 à 30 atomes de carbone; notamment un radical méthyle, éthyle, propyle ou butyle, éventuellement substitué par du fluor.

3. Dérivés selon la revendication 1, caractérisés en ce qu'ils comprennent des motifs dans lesquels R représente un groupe alcoxy éventuellement substitué comprenant de 1 à 30 atomes de carbone, de préférence méthoxy, éthoxy, propoxy, butoxy, aminoéthoxy ou halogénoéthoxy.

4. Dérivés selon la revendication 1, caractérisés en ce qu'ils comprennent des motifs dans lesquels R représente un groupe $-NH_2$ ou encore $-NHR_1$ ou $-N\begin{smallmatrix}R_2\\R_3\end{smallmatrix}$ dans lesquels $R_1$, $R_2$ et $R_3$ représentent des radicaux alcoyle de 1 à 30 atomes de carbone.

5.- Dérivés selon la revendication 1, caractérisés en ce qu'ils comprennent des motifs $-C(R)_x-$dans lesquels R représente un groupe cyano.

6.- Dérivés selon la revendication 1, caractérisés en ce qu'ils comprennent des motifs dans lesquels R représente un cycle aromatique en particulier un cycle benzénique ou encore un hétérocycle.

7.- Carbones polymères comportant les motifs $-C\ R_xH_y$ définis dans l'une quelconque des revendications précédentes, présentant une structure dérivée de celle des chaînes élaborées par réaction à partir d'un précurseur du radical R sur un carbone polymère réduit.

8. Procédé de préparation de dérivés de carbones polymères selon l'une quelconque des revendications 1 à 7, caractérisé en ce qu'on fait réagir un polymère organique macromoléculaire réduit formé de chaînes de carbone linéaire, ce polymère comprenant des motifs carbonés de structure

$$-(CM_z)-$$

dans laquelle

M représente un métal alcalin ;

z le taux d'insertion du métal alcalin sur la chaîne carbonée,

avec un dérivé comprenant un radical X capable de réagir avec le métal M pour former un sous-produit MX facilement soluble sans fixation X sur les chaînes carbonées et/ou un précurseur des radicaux R définis dans les revendications précédentes, ce précurseur étant suffisamment réactif pour former lui aussi un dérivé avec M, on sépare les sous-produits de la réaction et on récupère le polymère substitué par R.

9. Procédé selon la revendication 8, caractérisé en ce que le polymère réduit est obtenu par action d'un agent réducteur, plus spécialement d'un métal alcalin M ou d'un dérivé capable de libérer M, sur un polymère halogéné, plus spécialement le PTFE.

10. Procédé selon la revendication 9, caractérisé en ce que M est solvaté par le solvant du milieu réactionnel.

11. Procédé selon l'une quelconque des revendications 8 à 10, caractérisé en ce qu'on élimine les halogénures alcalins formés comme sous-produits de la réaction de réduction par dissolution en milieu acide ou en milieu basique.

12. Procédé selon l'une quelconque des revendications 8 à 10, caractérisé en ce qu'on sépare le métal M inséré dans le polymère réduit avant d'éliminer les halogénures alcalins formés comme sous-produits de la réaction de réduction et d'effectuer la réaction avec le dérivé permettant d'intorduire les groupes fonctionnels désirés.

13.- Application des dérivés selon l'une quelconque des revendications 1 à 7, comme capteurs électrochimiques pour des réactions électrochimiques sélectives.

0145518
Numéro de la demande

Office européen des brevets

EP 84 40 1868

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-1 162 218 (MONSANTO)<br>* revendications 1-14 * | 1 | C 08 F 8/00 |
| A | DE-B-1 121 040 (HOECHST)<br>* revendication 1 * | 1 | |
| | | | DOMAINES TECHNIQUES RECHERCHES (Int. Cl.4) |
| | | | C 08 F 8 |

Le présent rapport de recherche a été établi pour toutes les revendications

| Lieu de la recherche | Date d'achèvement de la recherche | Examinateur |
|---|---|---|
| LA HAYE | 07-12-1984 | PERMENTIER W.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant